# EUROPEAN PATENT SPECIFICATION

(11) **EP 3 850 932 B1**
(45) Date of publication and mention of the grant of the patent: **11.10.2023**
(21) Application number: 20152536.7
(22) Date of filing: 17.01.2020
(51) Int. Cl.: A01B 69/04, A01B 3/46, A01B 15/20

(54) **METHOD FOR CONTROLLING AN AGRICULTURAL PLOUGH**
VERFAHREN ZUR STEUERUNG EINES LANDWIRTSCHAFTLICHEN PFLUGES
PROCÉDÉ DE COMMANDE D'UNE CHARRUE AGRICOLE

(43) Date of publication of application: 21.07.2021
(73) Proprietor: CNH Industrial Sweden AB, 590 96 Överum (SE)
(72) Inventor: Hertzog, Daniel, 59376 Blackstad (SE); Nåhdin, Rickard Karl Gustav, 59492 Gamleby (SE); Svensson, Robert, 59095 Loftahammar (SE); Wallin, Per Dennis, 693 37 Västervik (SE); Linderson, Bengt Per-Inge, 594 94 Odensvi (SE); Nilsson, Carl Ola Fredrik, 59340 Västervik (SE)
(74) Representative: CNH Industrial IP Department

(56) References cited:
- EP-A1- 3 170 381
- EP-A1- 3 567 446
- US-A1- 2009 118 904
- US-A1- 2015 331 423
- US-A1- 2018 321 683

## Description

### Background of the Invention

The present disclosure relates to a computer-implemented method for controlling an agricultural plough, particularly, but not exclusively, during headland manoeuvres. Other aspects of the present disclosure relate to an agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs are often plough implements that include a plurality of plough bodies connected to a plough frame such that they are laterally offset manner from each other when the plough is in use. Each plough body is connected to the plough frame via corresponding beams. The plough frame, in turn, is connected to an agricultural vehicle for towing or pushing the plough implement via a hitch arranged at a front or back end of the frame.

The plough implement may be transferable between two or more positions. In an operating position, the plough implement may be positioned with respect to the agricultural vehicle such that the ground engaging tools of the plough penetrate the soil of the work area at a desired working depth. In a transfer or headland position, the plough implement may be positioned such that the ground engaging tools are lifted off the ground. The headland position may be used when reversing the agricultural machinery on the headland between two adjacent working rows, without affecting the soil of the headland. The plough implement may be hydraulically movable with respect to the agricultural vehicle between the operating position and the headland position.

Typically turning the agricultural machinery back on itself on the headland is considered to be one of the more challenging tasks for a plough operator. Considerable experience and precision is required for the operator to achieve adequate headland turns repeatedly without delaying the ploughing process too much.

In view of the above, there is generally a need for an improved method for controlling an agricultural machinery.

It is an aim of the present disclosure to solve or at least ameliorate one or more problems of the prior art.

EP 3 170 381 A1 describes a guidance system that may derive a K-turn path when a vehicle reaches an end of a first way line in a field.

US 2009/0118904 A1 describes to methods and systems for planning the path of an agricultural vehicle.

US 2015/0331423 A1 describes a method for defining a contoured path for an automatic guidance system comprising defining a plurality of reference path segments; for each segment, determining one or more intersection points respectively with other segments; and subsequently defining a contoured path as a sequence of intersecting segments.

US 2018/0321683 A1 describes a system including a processor configured to derive one or more partitions of a field based on a vehicle system data via a learning system.

EP3567446 A1 describes a work vehicle setting unit (36) in a route generating system which sets vehicle information on a tractor.

### Summary of the Invention

Aspects and embodiments of the invention provide a method for controlling an agricultural plough and a control unit as claimed in the appended claims.

In one embodiment, automatically determining a suitable headland turning routine comprises:
receiving control-data indicative of at least one of an operation of the agricultural plough or a field condition of the field across which the agricultural plough is being moved;
selecting the suitable headland turning routine from a plurality of predetermined headland turning routines on the basis of the control-data.

The control-data may comprise one or more of:
plough-data indicative of operating parameters of the agricultural plough;
trajectory-data indicative of a past, current, or future trajectory of the agricultural plough within the field; and
field-data indicative of a field condition of the field across which the agricultural plough is being moved.

The plough-data may comprise one or more of:
a speed of the agricultural plough;
a direction of travel of the agricultural plough with respect to the direction of the boundary between the work area and the headland;
a wheel slip of the agricultural plough; and
an orientation of the agricultural plough with respect to a horizontal plane.

In another embodiment, the agricultural plough comprises at least one ground engaging tool, a working depth of the ground engaging tool being adjustable, and wherein the plough-data comprises a working depth profile of the ground engaging tool across the field.

In yet another embodiment, the working depth profile comprises a sloped transition portion at the beginning and the end of adjacent working rows, and wherein the method comprises automatically determining a suitable headland ploughing routine on the basis of an extent and/or inclination of the transition portions.

The method may comprise activating the determined headland ploughing routine after ploughing of a last working row has been completed.

The field-data may comprise one or more of:
ground contours of the field;
dimensions of the headland;
a soil status;
obstacles within the field.

The trajectory-data may comprise one or more of:
a direction of previously completed working rows with respect to the boundary between the work area and the headland;
a direction of a current working row with respect to the boundary between the work area and the headland;
a direction of future working rows with respect to the boundary between the work area and the headland.

The boundary-data may comprise one or more of:
location-data of the agricultural plough within the field;
map-data of the field to be worked;
image-data related to the boundary between the work area and the headland.

In another embodiment, the map-data is acquired during prior work on the field.

In yet another embodiment, the plurality of predetermined headland turning routines comprise forward turn and/or reverse turn routines.

According to another aspect of the present invention, there is provided a computer program according to claim 14.

According to another aspect of the present disclosure, there is provided an agricultural plough implement, comprising the above control unit.

The agricultural implement may be a fully-mounted agricultural implement.
There may be provided a computer program, which when run on a computer, causes the computer to configure any apparatus, including a control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural work vehicle (or tractor) may include one or more control devices, such as but not limited to programmable or non-programmable processors. Similarly, the plough implement may include one or more control devices, such as but not limited to programmable or non-programmable processors. Additionally, or alternatively, the plough implement may be controlled by one or more control devices of the agricultural work vehicle. Similarly, the agricultural work vehicle may be controlled by one or more control devices of the plough implement.

The agricultural work vehicle and/or the plough implement may be remote controlled, e.g. from a farm office. Accordingly, the agricultural work vehicle may include one or more communication interfaces for connection to a remote processor and/or a remote controller. Similarly, the plough implement may include one or more communication interfaces for connection to a remote processor and/or a remote controller.

### Brief Description of the Drawings

One or more embodiments of the present disclosure will now be described by way of example only, with reference to the accompanying drawings, in which:
Figure 1A shows a right-side view of a plough implement with fixed ground engaging tools;
Figure 1B shows a left-side view of the plough implement shown in Figure 1A;
Figure 1C shows a plan view of the plough implement shown in Figure 1A;
Figure 2 shows a schematic plan view of a trajectory of an agricultural machinery on a field;
Figure 3 shows a schematic flow chart of a method according to an embodiment of the present disclosure;
Figure 4 shows a schematic flow chart of a method according to an embodiment of the present disclosure;
Figures 5 to 9 show schematic representations of various exemplary headland turning routines;
Figure 10 shows a schematic cross-section and plan view of a transition portion between a headland and a work area.

### Detailed Description of the Drawings

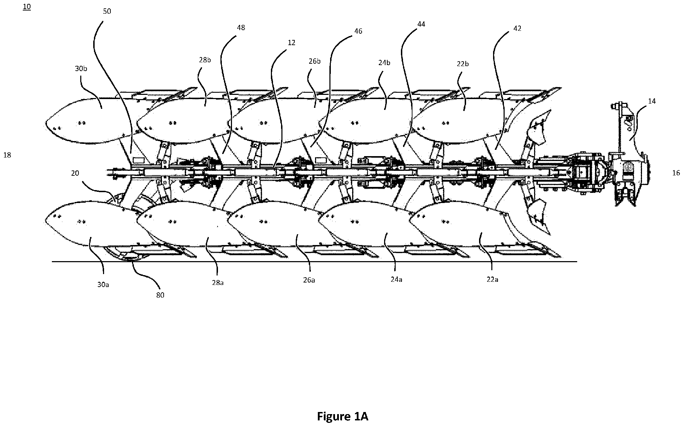

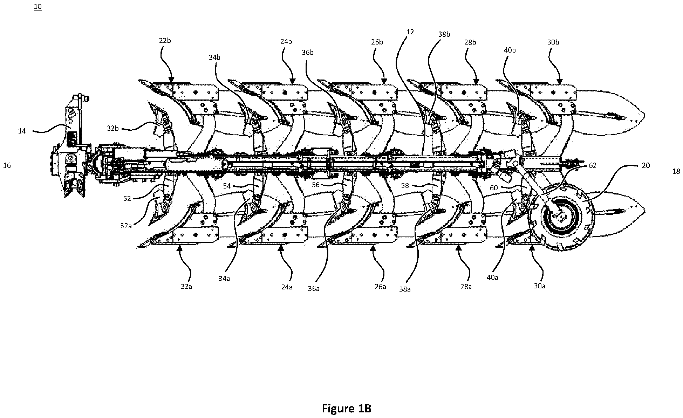

Figures 1A to 1C show various views of a plough implement, particularly a plough implement 10. As will be described in more detail below, the plough implement 10 shown in Figures 1A to 1C is a reversible plough.

The plough implement 10 comprises a main frame 12. The main frame 12 may be a rectangular or round tube extending between a headstock 14 at a front end 16 of the plough towards a plough wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of skimmers 40a, 40b. The skimmers 32a, 32b, 34a, 34b, 36a, 36b, 38a, 38b, 40a, 40b and/or their respective mounting rails 52, 54, 56, 58, 60 may be adjustable with respect to the main frame 12 to change the distance between the skimmers 32a, 32b, 34a, 34b, 36a, 36b, 38a, 38b, 40a, 40b and the main frame 12. In one example, the skimmers 32a, 32b, 34a, 34b, 36a, 36b, 38a, 38b, 40a, 40b may be movable up and down towards and away from the main frame 12 to individually adjust the working depth of each of skimmers 32a, 32b, 34a, 34b, 36a, 36b, 38a, 38b, 40a, 40b. The skimmers 32a, 32b, 34a, 34b, 36a, 36b, 38a, 38b, 40a, 40b may either be manually or automatically adjustable.

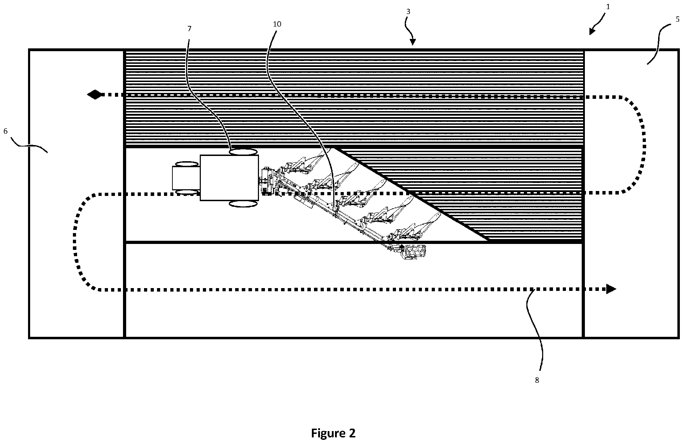

Turning to Figure 2, a typical operation of an agricultural machinery comprising an agricultural vehicle 7 and a plough implement 10 is described. In use, the plough implement 10 is drawn as an attachment (implement) behind the agricultural towing vehicle 7 (e.g. an agricultural vehicle). It will be appreciated that it is equivalently feasible to locate the plough implement 10 in front of or both in front of and behind the agricultural vehicle 7.

Figure 2 shows a schematic field 1, e.g. a crop field, which is divided into a main work area 3 and headlands 5,6. An agricultural vehicle 7 draws the plough implement 10 across the work area 3 in generally parallel working rows. The working rows are part of the trajectory 8 of the agricultural vehicle 7 and typically run in parallel with a long edge of the work area 1. Choosing to orientate the working rows in parallel with the long edge of the work area will reduce the number of headland turns required. Each working row represents an individual run of the agricultural machinery across the main area between headlands 5 and 6. As will be described in more detail below, a five-furrow plough, such as the exemplary plough shown in Figures 1A to 1C creates a total of five furrows per run.

At the end of each run/working row, the agricultural vehicle 7 and plough implement 10 use the upcoming headland 5 or 6 for turning around, as indicated by trajectory 8. The soil of the headlands 5, 6 may subject to greater levels of soil compaction as it receives more traffic per unit area than the work area 3. In order not to disturb the soil of the headlands 5, 6 more than necessary, the ground engaging tools, such as the plough bodies and the skimmers, are lifted off the ground into a headland or transfer position, just before the plough implement 10 reaches the headlands 5, 6 respectively. Once the agricultural vehicle 7 and the corresponding plough implement 10 have turned on the headland 5, 6, the ground engaging tools of the plough implement 10 are, again, lowered towards an operating position to engage the soil of the work area 3.

In the illustration of Figure 2, the plough implement 10 is working on the work area 3 and, therefore, is arranged in the operating position. As the plough implement 10 reaches the boundary between the headland 5, 6 and the work area 3, the plough implement 10 is transferred to a headland/transfer position. It follows that each working row starts with an adjustment of the plough from the headland position into the operating position and ends with an adjustment of the plough from the operating position into the headland position.

Once the plough implement has been transferred into its headland position, the agricultural machinery, including the agricultural vehicle 7 and the plough implement 10, can be turned back on itself such that the latter faces an opposite direction for the next run on the adjacent working row. In the schematic illustration of Figure 2, a headland routine is illustrated, often described as a "U-turn". The "U-turn" is one of the more basic headland routines and will be described in more detail below. Typically, the operator merely fully turns the steering wheel until a full 180 degree turn has been completed and work on the next working row can be commenced.

The plough implement 10 shown in Figures 1A to 1C is of the fully-mounted type. In fully-mounted ploughs, the weight of the plough is carried exclusively by the agricultural vehicle when the plough is in its transfer/headland position (on the headlands). In other words, the plough is then exclusively supported by the agricultural vehicle 7 via headstock 14 and may be lifted off the ground with a lift cylinder of a tractor linkage.

During the turning routine on the headlands, the plough implement 10 is also reversed. That is, the main frame 12 is rotated by 180 degrees with respect to the headstock 14 to move the plough from a first configuration to a second configuration. It will be appreciated that if the operator is ploughing in the furrow, then the main frame 12 may not be rotated by exactly 180 degrees, it is more likely to be 190-200 degrees or 160-170 degrees depending on which direction the main frame 12 turns. If operator is ploughing on-land, then the main frame 12 may be rotated by an angle that is closer to 180 degrees, perhaps exactly 180 degrees.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of agricultural vehicle 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the agricultural vehicle (not shown). The second configuration is, therefore, also sometimes referred to as the "right side configuration".

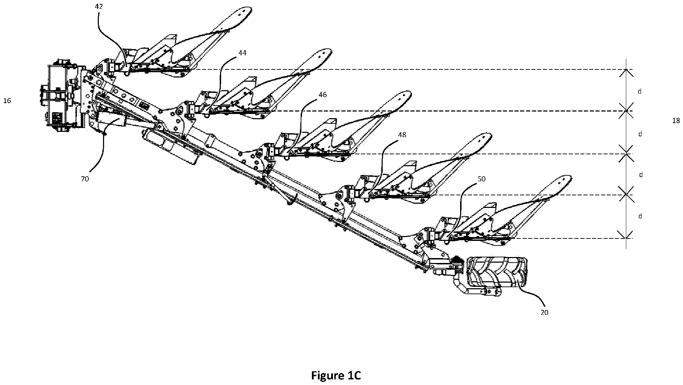

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C. The lateral distance d between the plough bodies may be adjusted by a plough-width-adjustment-actuator 70, which in this embodiment is a hydraulic cylinder.

As the reversible plough implement 10 reaches the end of the first run (or working row), the plough implement is lifted out of the soil and the work vehicle is turned back on the headland to face an opposition direction of travel in preparation of the second run. During this so called headland turning routine, the main frame 12 is also rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the work area 3, irrespective of the agricultural vehicle's orientation.

In summary, between adjacent working rows of the field 1, the agricultural plough, e.g. a tractor together with a corresponding plough implement, is turned around and the plough implement 10 reversed on the headlands 5, 6. Turning the agricultural plough back on itself on the headland and, at the same time, reversing the plough implement 10 can be a difficult task that requires a lot of experience from the operator. This is particularly the case if the size and ground surface of the headlands is not favourable, such that more complicated headland turning routines than the "U-turn" described with reference to Figure 2 are required. The present disclosure suggests a method for controlling an agricultural plough that may assist the operator in achieving efficient and repeatable headland turning manoeuvres to avoid inadvertent compaction of the soil on the headlands and repeatedly return the agricultural plough into an orientation that is parallel with the previous working row.

In the following, the term *"agricultural plough"* will be used to describe any agricultural ploughing machinery, such as a combination of an agricultural vehicle (e.g. a tractor) and a plough implement (e.g. a fully-mounted or semi-mounted plough implement).

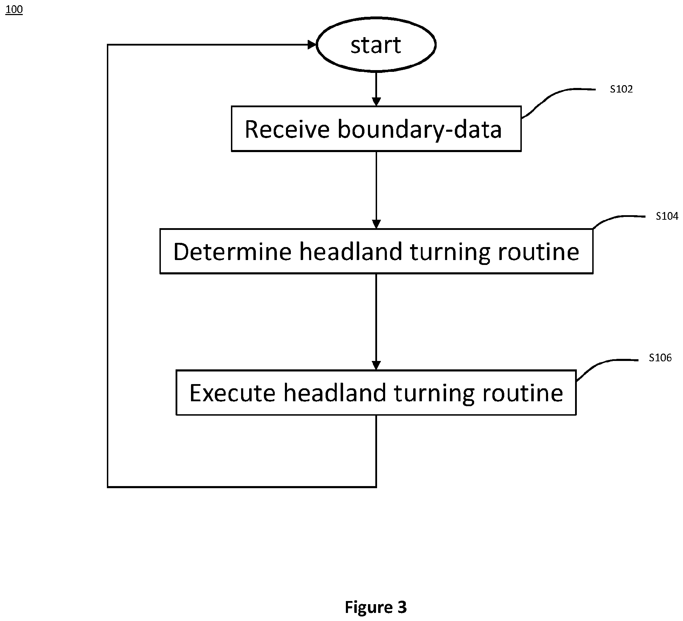

One embodiment of the computer-implemented method of the present disclosure is shown in Figure 3. The method 100 shown in Figure 3 includes a first step S102 for receiving boundary-data. Boundary-data may be indicative of a position of the agricultural plough , e.g. the position of the agricultural vehicle 7 and/or the plough implement 10, with respect to a boundary between the work area 3 and the respective headland 5, 6 of a field 1 across which the agricultural plough is being moved. The location of the boundary of the work area 3 may be available in a database of a control unit, e.g. as field-perimeter-data that is part of map-data within the database. In other words, the boundary-data may be any data that can be used to identify when the agricultural plough has reached the boundary between the work area 3 and the headlands 5, 6 at the beginning and the end of each working row. In one example, the boundary-data may comprise location-data of the agricultural plough within the field 1. The location-data may be generated by a GPS device associated with the agricultural plough. For example, a GPS device attached to the work vehicle 7 will allow a control unit to locate the position of the agricultural plough within the field. To this end, the boundary-data may also comprise map-data of the field to be worked. The map-data may be stored in a memory and accessed by a control unit at any time. If a GPS device is part of the work vehicle 7, then the relative position of the ground engaging tools of the plough implement 10 with respect to the GPS device may be stored in a memory such that the exact location of the ground engaging tools on the field can be calculated based on the location-data received by the GPS device. If the map-data includes the aforesaid field-perimeter-data, particularly the location of a boundary between the work area 3 and the headlands 5, 6, then a control unit will be able to identify (together with the location-data) when the agricultural vehicle is crossing the border between the work area 3 and the respective headland 5, 6.

Alternatively, or additionally, the boundary-data may comprise image-data related to the boundary between the work area 3 and the headland 5, 6. In this embodiment, image-data may be generated by an optical sensor associated with the agricultural plough. For example, an image sensor may be arranged on the front of the work vehicle 7 and configured to identify the border between the work area 3 and the headlands 5, 6 as the agricultural plough approaches the border. A control unit may be configured to use the image-data to determine when the plough will be crossing the border between the work area 3 and the respective headland 5, 6. The control unit may initiate a selected headland turning routine, as the plough crossed the boundary between the work area 3 and the respective headland 5, 6.

In another embodiment, the boundary-data, may be an operator input that identifies when the agricultural plough and/or the ground engaging tools of the agricultural plough cross the border between the work area and the headlands 5, 6. The boundary-data in the form of the operator input may be representative of one or more of a variety of positions of the agricultural plough in the field 1. In particular, the operator input may indicate when the front of the work vehicle 7 crosses the border between the work area 3 and the headlands 5, 6. Alternatively, the operator input may determine when the back end of the work vehicle, the front end of the plough implement 10, or the first plough body of the plough implement 10 crosses the border between the work area 3 and the headlands 5, 6.

All of the above embodiments describe different ways of receiving boundary-data per step S102 in order to define the position of the agricultural plough with respect to the boundary. In another step S104, the method includes automatically determining a suitable headland turning routine. It should be understood that steps S102 and S104 could also be performed in reverse order such that a suitable headland turning routine is already automatically determined before the boundary-data is received. In fact, the headland turning routine may even be determined before the agricultural plough starts working on the field in question.

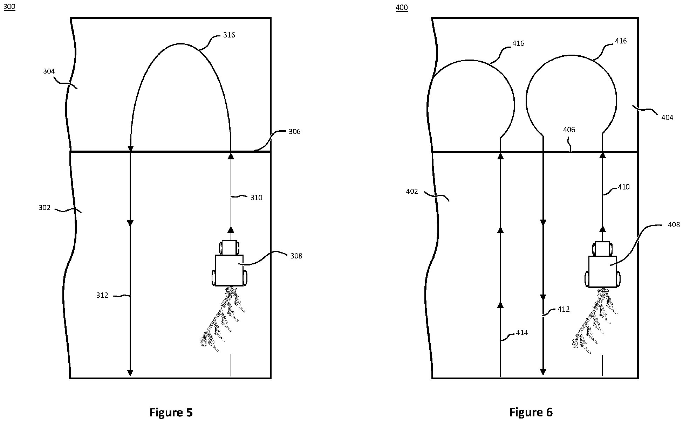

In step S104, a control unit associated with the agricultural plough may be used to assess the most appropriate headland turning routine, based on a variety of parameters, which will be discussed in more detail below. The control unit may select an appropriate headland turning routine from a plurality of predetermined headland turning routines stored in an associated database or look-up table. For example, the control unit may automatically choose between one of the four exemplary turning routines shown in Figures 5 to 8. Alternatively or additionally, the control unit may automatically calculate a suitable headland turning routine based on the parameters available.

In a final step S106, the determined headland turning routine is executed on the basis of the boundary-data received. In other words, the method will execute the determined headland turning routine when the boundary-data indicates that the agricultural plough is crossing or about to cross the border between the working area 3 and the headland 5, 6. That is, step S106 provides for an automatic start of the determined headland turning routine once the agricultural plough reaches the appropriate location.

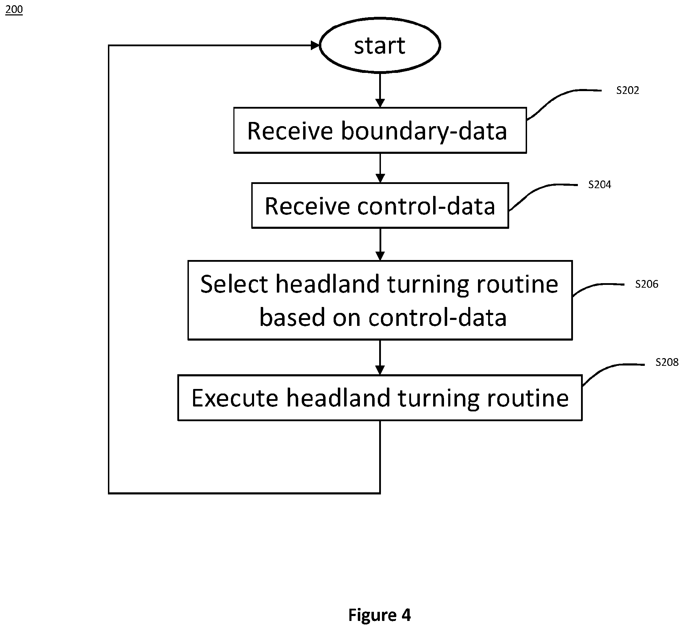

Another embodiment of the computer-implemented method of controlling an agricultural plough is shown in Figure 4. The method 200 shown in Figure 4 is similar to method 100 in that the first step S202 is essentially identical to first step S102 and the last step S208 of method 200 is essentially identical to the last step S106 of method 100.

A step S204 that follows step S202 of method 200 includes receiving control-data indicative of an operation of the agricultural plough or of field condition of the field across which the agricultural is being moved. The control-data may be any data pertinent to choosing the appropriate headland turning routine. In one example, the control-data may comprise plough-data associated with operating parameters of the agricultural plough. For example, the plough-data may include the speed of the agricultural plough. It will be understood that the speed of the agricultural plough may influence the appropriate headland turning routine since the possible turning radius may get larger as the speed of the agricultural plough increases. Accordingly, the control unit may choose reverse turning manoeuvres, which will be explained in more detail below, if the speed of the agricultural plough is too high when approaching the borderline between the work area 3 and the headland 5, 6.

Other examples of suitable control-data include trajectory-data indicative of past, current, or future trajectories of the agricultural plough within the work area. In one example, depending on the current trajectory of the agricultural plough, the control unit may decide that some headland turning routines are not appropriate. For example, a forward turning manoeuvre may be more appropriate for cases where the trajectory intersects the boundary at an oblique angle. In some embodiments, steps S204 and S206 may be completed before step 202.

In another example, the trajectory-data may include information about the future trajectory of the agricultural plough within the field. It will be appreciated that the control unit may not only control the headland turning routines, but may also plan the trajectory of the agricultural plough on the work area and the headlands. In this case, the control-data received may enable the control unit to determine the location at which the agricultural plough is supposed to enter and exit the headlands 5, 6. This may, in turn, facilitate determination of appropriate headland turning routines that enable the plough to be manoeuvred between the desired entry and exit points on the headlands 5, 6.

Another embodiment of the control-data may comprise field-data indicative of field conditions of the field across which the agricultural plough is being moved. Examples of field-data comprise the dimensions of the headland, ground contours, a soil status of the headland and/or obstacles within the field. Sloped headlands, for example, may require different headland turning routines compared to flat headlands.

In another step S206, the method 200 comprises selecting a suitable headland turning routine from a plurality of predetermined headland turning routines on the basis of the control-data. In detail, the method may consider one or more parameters of the control-data to determine the most appropriate headland turning routine. In one example, a control unit may consider control-data such as the size, slope, and soil status of the headland together with the plough speed to determine the most appropriate headland turning routine.

In one example, the control unit may determine a soil density (e.g. a soil status) on the basis of the control-data. The control-unit may then determine the soil density value with a soil-density threshold. If the soil density falls below the soil-density-threshold, i.e. the density of the soil is softer than the threshold value, the control-unit may determine that reverse turn headland turning routine, such as the "Y-turn" and "K-turn" routines described below, are not suitable. This is because soft soils (e.g. soils with a density below the soil-density-threshold) may cause the agricultural vehicle to get stuck if the vehicle is reversed during the headland turning routine. Similar consideration apply to a soil moisture content, which may be part of the soil status that, in turn, is part of the control-data.

The control unit may be configured to match the control-data values with corresponding parameters stored in a database or look-up table to determine the most preferable headland turning routine. Alternatively, the control-unit may also calculate a suitable headland turning routine as a function of the control-data values. Once an appropriate headland turning routine has been selected, the control unit may save the selected turning routine for any future headland turning manoeuvres or it may select an appropriate headland turning routine every time the agricultural plough enters the headlands.

As mentioned above, in a last step S208, the control unit automatically executes the selected headland turning routine once the boundary-data indicates that the agricultural plough is crossing or about to cross the border between the work area 3 and the headland 5, 6.

Turning to Figures 5 to 8, there are shown some examples of predetermined headland turning routines that could be chosen by the control unit.

Figure 5 shows an embodiment of a "U-turn" headland turning routine. In Figure 5, a schematic plan view of parts of a field 300 is shown. A working area 302 is separated from a headland 304 by a headland boundary 306. An agricultural plough 308 is schematically represented on the working area 302. In the example of Figure 5, the agricultural plough 308 comprises a work vehicle and a plough implement attached to the back of the work vehicle. Inside the working area 302, the agricultural plough 308 moves along parallel working rows 310, 312. On the headland 304, the agricultural plough 308 may move along a U-turn headland turning routine 316 to turn the plough around so as to face the next working row.

Depending on the turning radius of the agricultural plough, it may sometimes not be suitable to use a "U-turn" headland routine 316 to connect adjacent working rows, such as the first and second working rows 310, 312. Accordingly, if the control unit receives control-data indicating that the size (e.g. the depth or the width) of the headland 304 is not large enough for the "U-turn" headland turning routine 316 without the agricultural plough leaving the edges of the headland 304, the control unit may deem the "U-turn" headland turning routine 316 to be unsuitable and select a different headland turning routine.

A schematic representation of another headland turning routine is derivable from Figure 6. Figure 6 shows a schematic plan view of parts of a field 400 including a work area 402 separated from a headland 404 via a headland boundary 406. Similar to Figure 5, Figure 6 shows three adjacent working rows 410, 412, 414.

According to the example Figure 6, the agricultural plough 408 will turn around on the headland 404 in such a way that all of the adjacent working rows 410, 412, 414 can be worked in succession. To this end, the agricultural plough 408 may use an "Ω-turn" headland turning routine 416 to manoeuvre between the end of the first working row 410 and the beginning of the second working row 412. In the example of Figure 6, the agricultural plough 408 comprises a work vehicle and a plough implement attached to the back of the work vehicle. As will be appreciated, the "Ω-turn" headland turning routine 416 may require an even larger headland space than the "U-turn" headland turning routine 316. Accordingly, the control unit may consider the size of the headland 404 and the intended trajectory of the agricultural plough 408 in determining whether or not the "Q-turn" headland turning routine 416 is appropriate. The control unit may further consider the speed of the agricultural plough when crossing the boundary 406 between the work area 402 and the headland 404 in determining whether the "Ω-turn" headland turning routine 416 is appropriate. This is because the "Ω-turn" headland turning routine 416 may cause instability of the agricultural plough 408 if the speed of the agricultural plough 408 is too high when entering the headland 404 at the boundary 406.

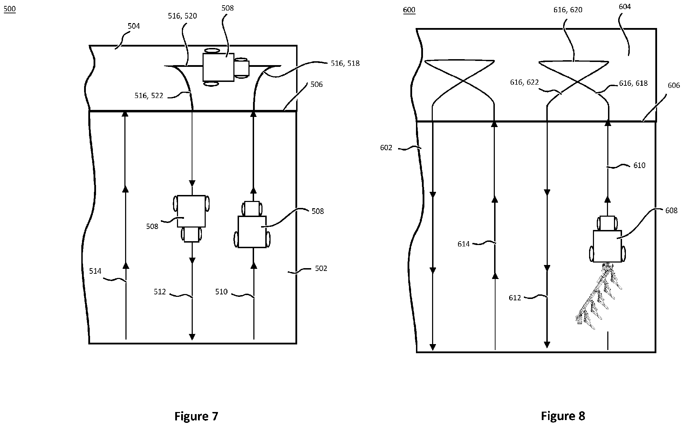

Both the "U-turn" and the "Ω-turn" headland turning routines 316, 416 shown in Figures 5 and 6 can be categorised as "forward turn" headland turning routines, meaning that no rearward motion of the agricultural plough 408 is required on the headlands 304, 404 in order to complete the headland turning routine. By contrast, Figures 7 and 8 show two examples of "reverse turn" headland turning routines, in which some part of the headland turning routines requires the agricultural plough to be driven in reverse.

Turning to Figure 7, there is shown a field 500 with a work area 502 separated from a headland 504 by a headland boundary 506. An agricultural plough 508 is schematically illustrated working on three working rows 510, 512, 514. In the example of Figure 7, the agricultural plough 508 comprises a work vehicle and a plough implement attached to the back of the work vehicle. In the interest of simplicity, the plough implement has been removed from Figure 7, however it should be understood that the plough implement is part of the plough 508 of this embodiment. It will be appreciated that the size of the headland 504 of the example shown in Figure 7 is significantly smaller than the size of the headlands 304 and 404 shown in the examples of Figures 5 and 6. When a control-unit receives control-data indicating that the size of the headland 504 is restricted, the control unit may determine that a reverse turn headland turning routine, such as the "Y-turn" headland turning routine 516 shown in Figure 7, is required. To this end, the control unit may compare the one or more values of the control-data to a headland-size-threshold. If one or more of the values of the control-data fall below the headland-size-threshold, the control unit may determine that a reverse turn headland turning routine is required.

The control-data is indicative of the size of the headlands shown in Figures 5 to 8. In some embodiments, the term "size" may relate to the depth of the working row, i.e. the distance between an inner boundary of the headland that encloses the work area and an outer boundary of the headland that may be defined by a road, hedges or adjacent fields. A control unit may have access to map-data that includes all of the above control-data, e.g. the location of the inner and outer boundary of the headland(s).

In the "Y-turn" headland turning routine 516, the end of the first working row 510 is connected to the beginning of the second working row 512 via the "Y-turn" path shown on the headland 504. The "Y-turn" headland turning routine 516 shown in Figure 7 comprises three sections. In a first section 518, the agricultural plough 508 is turned at 90 degrees away from the next working row 512, e.g. by automatically steering the work vehicle of the agricultural plough 508 at 90 degrees. In a second section 520, the agricultural plough 508 is then reversed in the direction of, and in this example beyond, the second working row 512. In a last, third section 522 of the "Y-turn" headland turning routine 516, the agricultural plough is then again turned at around 90 degrees, e.g. by means of automatically steering the agricultural work vehicle, so as to face the boundary 506 of the headland 504. The "Y-turn" headland turning routine 516 may be used to connect the end of the first working row 510 to the beginning of the adjacent, second working row 512 when space on the headland 504 is restricted. Furthermore, the control unit may determine to utilise the "Y-turn" headland turning routine 516 especially if the control-data indicates that the headland 504 is sloped in order to increase the stability of the agricultural plough 508 during the headland turning routine.

In one embodiment, the control-data may include field-contour-data as part of the map-data, the field-contour-data being indicative of gradients within the field, i.e. the work area and the headland(s). A control unit may compare one or more values of the field-contour-data, e.g. the values of the field-contour-data that are indicative of a gradient on a section of the headland that will be used for the next turning routine, with a headland-gradient-threshold. If one or more values of the field-contour-data exceed the headland-gradient-threshold, the control unit may determine that a "Y-turn" headland turning routine 516 is required.

A second "reverse turn" headland turning routine is derivable from the illustration of Figure 8. Figure 8 shows a field 600 with a work area 602 separated from a headland 604 via a headland boundary 606. An agricultural plough 608 is set to work on three adjacent working rows 610, 612, 614. In the example of Figure 8, the agricultural plough 608 comprises a work vehicle and a plough implement attached to the back of the work vehicle. In order to connect the end of the first working row 610 to the beginning of the second working row 612, a "K-turn" headland turning routine 616 is followed. The "K-turn" headland routine 616 comprises three sections 618, 620, 622. In a first section 618, the agricultural plough 608 is turned by around 90 degrees towards the second working row 612. In a second section 620 of the "K-turn" headland turning routine 616, the agricultural plough 608 is reversed towards the first working row 610. Finally, in a third section 622, the agricultural plough 608 is again turned by 90 degrees towards the headland boundary 606 to connect to the beginning of the second working row 612. The first and third sections 618, 622 cross during the "K-turn" headland turning routine.

In one example, the control unit may choose the "K-turn" headland turning routine 616 over the "Y-turn" headland turning routine 516 if the control-data indicates that the speed of the agricultural plough 608 is above a certain threshold when crossing the headland boundary. To this end, the control unit may compare plough speed values of the control-data to a speed-threshold in addition to the comparison steps set out above in connection with the "Y-turn" headland turning routine 516.

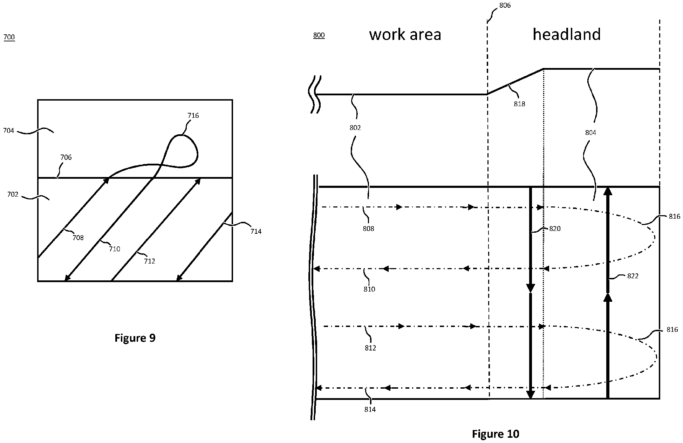

A schematic representation of another working headland turning routine is shown in Figure 9. Figure 9 shows part of a field 700 comprising a work area 702 separated from a headland 704 by a headland boundary 706. Four working rows 708, 710, 712, 714 are shown in parallel in the work area 714. A first working row 708 is connected to a second, parallel and adjacent working row 710 via "loop-turn" headland turning routine 716. Each of the working rows 708, 710, 712, 714 extends at an oblique angle with respect to the headland boundary 706. A control unit may use this information, provided together with the control-data, to determine a suitable headland turning routine. The loop-turn headland turning routine 716 may be calculated by the control unit rather than being chosen from a plurality of predetermined headland turning routines. The control unit may use various parameters of the control-data, such as the angle between the working rows 708, 710, 712, 714 and the headland boundary 706 or the speed of the agricultural vehicle in determining the "loop-turn" headland turning routine 716. For example, the control unit may set the radius of the loop on the basis of the speed of the agricultural vehicle.

It should be understood that the control unit may also act to optimise the operational time in determining the appropriate headland turning routine. For example, the control unit may consider a plurality of possible working row orientations and their appropriate headland turning routines and select the combination of working rows and headland turning routines that exhibits the shortest total operational time for the agricultural plough. In other words, one factor in determining a suitable headland turning routine may be an optimised trajectory of the agricultural plough. To this end, the control-unit may indeed utilise a non-optimal (e.g. longer or more damaging to the soil than necessary) headland turning routine if it enables a shorter and/or quicker overall trajectory, for example due to fewer working rows.

Once the control-unit has determined a suitable headland turning routine, the control-unit may also adjust one or more of the operating parameters of the work vehicle or the plough implement to support execution of the determined headland turning routine.

In one embodiment, the control unit may use one of the plough actuators to move the frame and/or the ground engaging tools of the plough implement so as to facilitate the headland turning routine. For example, the control-unit may utilise the plough-width-adjustment-actuator 70 described with reference to Figure 1C in order to change the angle of the main frame 12 during or before the headland turning routine. In changing the angle of the main frame 12 (e.g. by extending the actuator 70), the control unit may avoid contact of the frame with obstacles, such as hedges at the outer border of the headland. To this end, the control unit may determine on the basis of field-data, i.e. obstacle-data, that is part of the control-data a necessary angle adjustment of the main frame 12 so as to avoid collisions when using one of the predetermined headland turning routines. Various other ways of manipulating the functional parts of the agricultural plough are feasible to avoid collision with obstacles in or around the headlands or to improve the efficiency of the headland turning process.

According to the invention, the control unit is configured to actively dampen the movement of the plough implement with respect to the agricultural vehicle on the basis of the selected turning routine. As will be appreciated, during most headland turning routines discussed above, especially during "reverse turn" headland turning routines, the agricultural vehicle will decelerate. Deceleration of the agricultural vehicle will also affect the plough implement. The inertia of the plough implement will try to maintain movement of the plough implement in the direction of travel, causing a momentum that will be transferred onto the agricultural vehicle via the headstock and cause additional weight on the front suspension of the agricultural vehicle. In fast braking operations, the momentum will be particularly high, therefore possibly causing damage to the agricultural vehicle suspension. To prevent excessive momenta to be transferred from the agricultural implement onto the agricultural vehicle, the control unit may automatically activate an operation of at least one of the actuators for moving components of the agricultural implement. In other words, on the basis of the selected headland turning routines, the control unit may expect certain breaking and turning events. Accordingly, the control unit may activate one or more of the above plough actuators to try and reduce an expected impact of the inertia of the agricultural implement during the headland turning routine. To this end, the control unit may have access to a database including damping-control-data for each of the predetermined headland turning routines. The damping-control-data may include actuator-control-data that may be applicable to move one or more of the plough actuators to reduce the impact of the plough implement's inertia.

In another embodiment, the control unit may assist the headland turning routine by adjusting plough operating conditions, such as the speed of travel and the direction of travel on the basis of the control-data. In particular, after selecting a suitable headland turning routine, the control unit may compare the current speed of travel received via the control-data with a desired speed for the selected headland turning routine and adjust the current speed to match the desired speed.

In yet another example, the control unit may assist the headland turning routine by initiating the reversal of the plough frame of the plough implement at a suitable point during the headland turning routine. The control unit may be configured to select a suitable reversal-initiation-time on the basis of the selected headland turning routine. To this end, the control unit may have access to a database that includes a predetermined reversal-initiation-time for each of the plurality of predetermined headland routines that are available to the control unit. In one example, the control unit may be configured to start the reversal of the plough frame at a reversal-initiation-time that coincides with the backwards movement of the agricultural plough during a "reverse turn" headland turning routine, such as the headland turning routines illustrated in Figures 7 and 8. Turning to Figure 7, the control unit may be configured to initiate reversal at the start of the second section 520, i.e. when the work vehicle of the plough 508 is driven backwards. To this end, the control unit may receive work-vehicle-data that is indicative of a direction of travel of the work vehicle of the agricultural plough. The control unit may be configured to determine a change in direction from forwards to backwards on the basis of the work-vehicle-data and initiate the reversal process at that time. Alternatively, the control unit may be configured to start the reversal process at any other suitable point in time. Referring to Figure 7, the control unit may start the reversal process during the first or third sections 518, 522, for example.

In some embodiments, the control unit may be configured to partly reverse the plough frame during a first section, such as the first section 518 of Figure 7, e.g. by rotation the plough frame by around 90 degrees and finish the reversal process during a second section of the headland turning routine, such as the third section 522 of Figure 7, e.g. by rotation of the plough frame by a further 90 degrees. Partly reversing the plough frame initially and finishing reversal at a later stage, may be advantageous in avoiding collisions with obstacles during the headland turning routine. Accordingly, the control unit may select/determine suitable reversal-initiation-times on the basis on the basis of the selected headland turning routing together with obstacle-data mentioned above.

In yet another embodiment, the control unit may be configured to determine a reversal-initiation-time as a time when all of the ground engaging tools of the plough implement (e.g. the plough bodies and/or the skimmers) have been fully removed from the ground and initiate the reversal process after full removal. To this end, the control unit may be provided with plough-implement-data indicative of a position of the ground engaging tools. In one example, the plough-implement-data may include actuator-position-data that is representative of a position of the actuators of a three-point-hitch connecting the plough implement to the back of the agricultural work vehicle. Such actuators of the three-point-hitch may be a top-link actuator and one or more lifting arm actuators. As will be understood, the position of said actuators may be used to determine the removal status of the ground engaging tools. For example, if the plough-implement-data indicates that the top-link actuator and the lifting arm actuators are fully retracted, the control unit may determine that all of the ground engaging tools are fully removed from the soil and initiate the reversal process. This reversal initiation process may be used in forward turn headland turning routines, such as the headland turning routines illustrated in Figures 5 and 6. In other words, the control unit may be configured to determine the reversal-initiation-time on the basis of the selected headland turning routine together with plough-implement-data, such as the actuator-position-data.

Figure 10 shows a schematic cross-section and a schematic plan view of a field 800 comprising a work area 802 separated from a headland 804 by a headland boundary 806. Figure 10 shows a total of four working rows 808, 810, 812, 814. Adjacent working rows are connected, in this example by "U-turn" headland turning routines 816.

It will be understood that the ground engaging tools of the agricultural plough implement cannot be lifted out of the soil instantly when reaching the headland boundary 806. Rather, the working depth of the ground engaging tools, such as the plough bodies described above, will always decrease gradually until all of the plough bodies have been lifted out of the soil. As a consequence of the gradual lifting of the plough bodies, a sloped transition portion 818 will form on the boundary between the work area and the headland. In the example of Figure 10, the sloped transition portion 818 is part of the headland 804. However, depending on the operator's preferences, the sloped transition portion 818 could also be part of the work area 802, i.e. immediately ahead of the boundary 806, or it could span the boundary 806. The different working depth within the work area 802, the sloped transition portion 818 and the headland 804 together make up a working depth profile schematically illustrated in the cross-section of Figure 10.

The working depth profile of each working row may be stored in a database by a control unit during the operation of the agricultural plough. For example, the working depth profile may be stored as plough-data.

The working depth profile stored by the control unit may be used later in the process to determine a suitable "headland ploughing routine". The term "headland ploughing routine" differs from the term "headland turning routine" used above and refers to a set of instructions provided to the control unit of an agricultural plough for ploughing the headlands usually once all of the working rows of the work area 802 have been completed. At this point, i.e. when the work area has been fully ploughed, it is customary to finish the ploughing process by also ploughing the headlands 804. Figure 10 shows two exemplary headland working rows 820, 822. Depending on the size and shape of the headland 804, there may be more or less than two headland working rows. The headland working rows may be oriented in various different ways.

The control unit may use the working depth profile discussed above to adjust the agricultural plough appropriately in preparation for ploughing the headlands. This adjustment is part of a headland ploughing routine, in which the control unit may determine to change the position/configuration of the agricultural plough implement to compensate for the sloped transition portion 818, e.g. when the agricultural plough is moved along the first working row 820 of the headland 804. In particular, the sloped transition portion 818 may cause the agricultural plough to lean towards the bottom of the slope when ploughing the first working row 820, since one of the work vehicles tyres may be running on lower grounds than the other. Accordingly, before ploughing the first headland working row 820, the control unit may adjust one or more actuators of the agricultural plough to level the ground engaging tools in spite of the roll of the associated work vehicle. In more detail, the control unit may, for example, use the turning cylinder discussed above to rotate the frame of the agricultural implement slightly with respect to the work vehicle so as to compensate for the slope of the transition portion.

The above method of using the working depth profile in determining an appropriate plough configuration for the headland ploughing routine ensure a homogenous, high-quality headland ploughing result, irrespective of the operator's experience.

While the above has been described in relation to agricultural ploughs, it should be understood that the present disclosure is generally applicable to any agricultural machinery including one or more agricultural implements.

The listing or discussion of an apparently prior-published document in this specification should not necessarily be taken as an acknowledgement that the document is part of the state of the art or is common general knowledge.

## Claims

1. A computer-implemented method for controlling an agricultural plough, wherein the method comprises:
receiving (S102, S202) boundary-data indicative of a position of the agricultural plough with respect to a boundary between a work area (3) and a headland (5, 6) of a field (1) across which the agricultural plough is being moved;
automatically determining (S104) a suitable headland turning routine;
controlling the execution of (S106, S208) the determined headland turning routine on the basis of the boundary-data received; and
**characterised by** actively controlling the damping of the movement of a plough implement (10) of the agricultural plough with respect to an agricultural vehicle on the basis of the determined headland turning routine.

2. The computer-implemented method of claim 1, wherein automatically determining (S104) a suitable headland turning routine comprises:
receiving (S204) control-data indicative of at least one of an operation of the agricultural plough or a field condition of the field across which the agricultural plough is being moved;
selecting (S206) the suitable headland turning routine from a plurality of predetermined headland turning routines on the basis of the control-data.

3. The computer-implemented method of claim 2, wherein the control-data comprises one or more of:
plough-data indicative of operating parameters of the agricultural plough;
trajectory-data indicative of a past, current, or future trajectory of the agricultural plough within the field; and
field-data indicative of a field condition of the field across which the agricultural plough is being moved.

4. The computer-implemented method of claim 3, wherein the plough-data comprises one or more of:
a speed of the agricultural plough;
a direction of travel of the agricultural plough with respect to the direction of the boundary between the work area and the headland;
a wheel slip of the agricultural plough; and
an orientation of the agricultural plough with respect to a horizontal plane.

5. The computer-implemented method of claim 4, wherein the agricultural plough comprises at least one ground engaging tool, a working depth of the ground engaging tool being adjustable, and wherein the plough-data comprises a working depth profile of the ground engaging tool across the field.

6. The computer-implemented method of claim 5, wherein the working depth profile comprises a sloped transition portion at the beginning and the end of adjacent working rows, and wherein the method comprises automatically determining a suitable headland ploughing routine on the basis of an extent and/or inclination of the transition portions.

7. The computer-implemented method of claim 6, wherein the method comprises activating the determined headland ploughing routine after ploughing of a last working row has been completed.

8. The computer-implemented method of any of claims 3 to 7, wherein the field-data comprises one or more of:
ground contours of the field;
dimensions of the headland;
a soil status;
obstacles within the field.

9. The computer-implemented method of any of claims 3 to 8, wherein the trajectory-data comprises one or more of:
a direction of previously completed working rows with respect to the boundary between the work area and the headland;
a direction of a current working row with respect to the boundary between the work area and the headland;
a direction of future working rows with respect to the boundary between the work area and the headland.

10. The computer-implemented method of any of claims 1 to 9, wherein the boundary-data comprises one or more of:
location-data of the agricultural plough within the field;
map-data of the field to be worked;
image-data related to the boundary between the work area and the headland.

11. The computer-implemented method of claim 10, wherein the map-data is acquired during prior work on the field.

12. The computer-implemented method of any of Claims 1 to 11, wherein the plurality of predetermined headland turning routines comprise forward turn and/or reverse turn routines.

13. A control unit for controlling an agricultural plough, the agricultural plough comprising:
an agricultural vehicle (7); and
a plough implement (10),
wherein the control unit is configured to:
receive boundary-data indicative of a position of the agricultural plough with respect to a boundary between a work area (3) and a headland (5, 6) of a field (1) across which the agricultural plough is being moved;
automatically determine a suitable headland turning routine; control the execution of the determined headland turning routine on the basis of the boundary-data received; and
**characterised in that** the control unit is further configured to actively control the damping of the movement of the plough implement with respect to the agricultural vehicle on the basis of the determined headland turning routine.

14. A computer program comprising instructions which, when the program is executed by a control unit, cause the control unit to perform the method of any of Claims 1 to 12.

15. An agricultural plough implement, comprising the control unit of Claim 13.

## Patentansprüche

1. Computerimplementiertes Verfahren zur Steuerung eines landwirtschaftlichen Pflugs, wobei das Verfahren umfasst:
Empfangen (S102, S202) von Grenzdaten, die kennzeichnend für eine Position des landwirtschaftlichen Pflugs bezüglich einer Grenze zwischen einem Arbeitsbereich (3) und einem Vorgewende (5, 6) eines Felds (1) sind, über das der landwirtschaftliche Pflug bewegt wird;
Automatisches Bestimmen (S104) einer geeigneten Vorgewende-Wende-Routine;
Steuern der Ausführung (S106, S208) der bestimmten Vorgewende-Wende-Routine auf Basis der empfangenen Grenzdaten; und
**gekennzeichnet durch** aktives Steuern der Dämpfung der Bewegung eines Pflug-Arbeitsgeräts (10) des landwirtschaftlichen Pflugs bezüglich eines landwirtschaftlichen Fahrzeugs auf Basis der bestimmten Vorgewende-Wende-Routine.

2. Computerimplementiertes Verfahren nach Anspruch 1, wobei das automatische Bestimmen (S104) einer geeigneten Vorgewende-Wende-Routine umfasst:
Empfangen (S204) von Steuerdaten, die kennzeichnend für mindestens einen aus einem Betrieb des landwirtschaftlichen Pflugs oder einem Feldzustand des Felds sind, über das der landwirtschaftliche Pflug bewegt wird;
Auswählen (S206) der geeigneten Vorgewende-Wende-Routine aus einer Mehrzahl von vorbestimmten Vorgewende-Wende-Routinen auf Basis der Steuerdaten.

3. Computerimplementiertes Verfahren nach Anspruch 2, wobei die Steuerdaten eine oder mehrere der folgenden aufweisen:
Pflugdaten, die kennzeichnend für Betriebsparameter des landwirtschaftlichen Pflugs sind;
Bewegungsbahndaten, die kennzeichnend für eine vergangene, gegenwärtige oder zukünftige Bewegungsbahn des landwirtschaftlichen Pflugs innerhalb des Felds sind; und
Felddaten, die kennzeichnend für einen Feldzustand des Felds sind, über das der landwirtschaftliche Pflug bewegt wird.

4. Computerimplementiertes Verfahren nach Anspruch 3, wobei die Pflugdaten eine oder mehrere der folgenden aufweisen:
eine Geschwindigkeit des landwirtschaftlichen Pflugs;
eine Bewegungsrichtung des landwirtschaftlichen Pflugs bezüglich der Richtung der Grenze zwischen dem Arbeitsbereich und dem Vorgewende;
einen Radschlupf des landwirtschaftlichen Pflugs; und
eine Orientierung des landwirtschaftlichen Pflugs bezüglich einer horizontalen Ebene.

5. Computerimplementiertes Verfahren nach Anspruch 4, wobei der landwirtschaftliche Pflug mindestens ein bodeneingreifendes Werkzeug aufweist, wobei eine Arbeitstiefe des bodeneingreifenden Werkzeugs verstellbar ist und wobei die Pflugdaten ein Arbeitstiefenprofil des bodeneingreifenden Werkzeugs über das Feld aufweisen.

6. Computerimplementiertes Verfahren nach Anspruch 5, wobei das Arbeitstiefenprofil einen schrägen Übergangsabschnitt an dem Anfang und dem Ende von angrenzenden Arbeitsreihen aufweist und wobei das Verfahren ein automatisches Bestimmen einer geeigneten Vorgewende-Pflüge-Routine auf Basis einer Größe und/oder Neigung des Übergangsabschnitts aufweist.

7. Computerimplementiertes Verfahren nach Anspruch 6, wobei das Verfahren ein Aktivieren der bestimmten Vorgewende-Pflüge-Routine aufweist, nachdem ein Pflügen einer letzten Arbeitsreihe fertiggestellt wurde.

8. Computerimplementiertes Verfahren nach einem der Ansprüche 3 bis 7, wobei die Felddaten eine oder mehrere der folgenden aufweisen:
Bodenkonturen des Felds;
Dimensionen des Vorgewendes;
einen Bodenzustand;
Hindernisse innerhalb des Felds.

9. Computerimplementiertes Verfahren nach einem der Ansprüche 3 bis 8, wobei die Bewegungsbahndaten eine oder mehrere der folgenden aufweisen:
eine Richtung von zuvor fertiggestellten Arbeitsreihen in Bezug zu der Grenze zwischen dem Arbeitsbereich und dem Vorgewende;
eine Richtung einer gegenwärtigen Arbeitsreihe in Bezug zu der Grenze zwischen dem Arbeitsbereich und dem Vorgewende;
eine Richtung von zukünftigen Arbeitsreihen in Bezug zu der Grenze zwischen dem Arbeitsbereich und dem Vorgewende.

10. Computerimplementiertes Verfahren nach einem der Ansprüche 1 bis 9, wobei die Grenzdaten eine oder mehrere der folgenden aufweisen:
Lagedaten des landwirtschaftlichen Pflugs innerhalb des Felds;
Kartendaten des Felds, das zu bearbeiten ist;
Bilddaten betreffend die Grenze zwischen dem Arbeitsbereich und dem Vorgewende.

11. Computerimplementiertes Verfahren nach Anspruch 10, wobei die Kartendaten während einer vorausgehenden Arbeit auf dem Feld erfasst werden.

12. Computerimplementiertes Verfahren nach einem der Ansprüche 1 bis 11, wobei die Mehrzahl von vorbestimmten Vorgewende-Wende-Routinen Vorwärts-Wende- und/oder Rückwärts-Wende-Routinen aufweisen.

13. Steuereinheit zur Steuerung eines landwirtschaftlichen Pflugs, wobei der landwirtschaftliche Pflug aufweist:
ein landwirtschaftliches Fahrzeug (7); und
ein Pflug-Arbeitsgerät (10),
wobei die Steuereinheit eingerichtet ist zum:
Empfangen von Grenzdaten, die kennzeichnend für eine Position des landwirtschaftlichen Pflugs bezüglich einer Grenze zwischen einem Arbeitsbereich (3) und einem Vorgewende (5, 6) eines Felds (1) sind, über das der landwirtschaftliche Pflug bewegt wird;
Automatisches Bestimmen einer geeigneten Vorgewende-Wende-Routine;
Steuern der Ausführung der bestimmten Vorgewende-Wende-Routine auf Basis der empfangenen Grenzdaten; und
**dadurch gekennzeichnet, dass** die Steuereinheit des Weiteren dazu eingerichtet ist, die Dämpfung der Bewegung des Pflug-Arbeitsgeräts bezüglich des landwirtschaftlichen Fahrzeugs auf Basis der bestimmten Vorgewende-Wende-Routine aktiv zu steuern.

14. Computerprogramm mit Befehlen, die, wenn das Programm von einer Steuereinheit ausgeführt wird, die Steuereinheit dazu veranlassen, das Verfahren nach einem der Ansprüche 1 bis 12 auszuführen.

15. Landwirtschaftliches Pflug-Arbeitsgerät mit der Steuereinheit nach Anspruch 13.

## Revendications

1. Procédé mis en oeuvre par ordinateur pour la commande d'une charrue agricole, dans lequel le procédé comprend les étapes consistant à :
recevoir (S102, S202) des données limites indiquant la position de la charrue agricole par rapport à une limite entre une zone de travail (3) et une tournière (5, 6) d'un champ (1) sur lequel la charrue agricole est déplacée ;
déterminer automatiquement (S104) une routine de virage adéquate en tournière ;
commandant l'exécution de (S106, S208) la routine de virage en tournière déterminée en fonction des données limites reçues ; et
**caractérisé par** la commande active de l'amortissement du mouvement d'un outil de charrue (10) de la charrue agricole par rapport à un véhicule agricole en fonction de la routine déterminée de virage en tournière.

2. Procédé informatique selon la revendication 1, dans lequel la détermination automatique (S104) d'une routine adaptée de virage en tournière comprend :
la réception (S204) de données de commande indiquant au moins une exploitation de la charrue agricole ou une condition de champ du champ sur lequel la charrue agricole est déplacée ;
la sélection (S206) de la routine adaptée de virage en tournière, à partir de plusieurs routines de virage en tournière prédéterminées en fonction des données de commande.

3. Procédé mis en oeuvre par ordinateur selon la revendication 2, dans lequel les données de commande comprennent une ou plusieurs données parmi :
des données de charrue indiquant des paramètres de fonctionnement de la charrue agricole ;
des données de trajectoire indiquant une trajectoire passée, actuelle ou future de la charrue agricole dans le champ ; et
des données de champ indiquant l'état du champ dans lequel la charrue agricole est déplacée.

4. Procédé mis en oeuvre par ordinateur selon la revendication 3, dans lequel les données de charrue comprennent une ou plusieurs des données parmi :
une vitesse de la charrue agricole ;
une direction de déplacement de la charrue agricole par rapport à la direction de la limite entre la zone de travail et la tournière ;
un patinage des roues de la charrue agricole ; et
une orientation de la charrue agricole par rapport à un plan horizontal.

5. Procédé mis en oeuvre par ordinateur selon la revendication 4, dans lequel la charrue agricole comprend au moins un outil en prise avec le sol, une profondeur de travail de l'outil en prise avec le sol étant réglable, et dans lequel les données de la charrue comprennent un profil de profondeur de travail de l'outil en prise avec le sol dans le champ.

6. Procédé mis en oeuvre par ordinateur selon la revendication 5, dans lequel le profil de profondeur de travail comprend une partie de transition inclinée au début et à la fin des rangées de travail adjacentes, et dans lequel le procédé comprend la détermination automatique d'une routine adaptée de labourage en tournière en fonction d'une étendue et/ou d'une inclinaison des parties de transition.

7. Procédé mis en oeuvre par ordinateur selon la revendication 6, dans lequel le procédé comprend l'activation de la routine de labourage en tournière déterminée après la fin du labourage d'une dernière rangée de travail.

8. Procédé mis en oeuvre par ordinateur selon l'une quelconque des revendications 3 à 7, dans lequel les données de champ comprennent une ou plusieurs des données parmi :
des contours du sol du champ ;
des dimensions de la tournière ;
un état du sol ;
des obstacles dans le champ.

9. Procédé mis en oeuvre par ordinateur selon l'une quelconque des revendications 3 à 8, dans lequel les données de trajectoire comprennent une ou plusieurs des données parmi :
une direction des rangées de travail déjà terminées par rapport à la limite entre la zone de travail et la tournière ;
une direction d'une rangée de travail actuelle par rapport à la limite entre la zone de travail et la tournière ;
une direction des futures rangées de travail par rapport à la limite entre la zone de travail et la tournière.

10. Procédé mis en oeuvre par ordinateur selon l'une quelconque des revendications 1 à 9, dans lequel les données de limite comprennent une ou plusieurs des données parmi :
des données de localisation de la charrue agricole dans le champ ;
des données cartographiques du champ à travailler;
des données-images relatives à la limite entre la zone de travail et la tournière.

11. Procédé mis en oeuvre par ordinateur selon la revendication 10, dans lequel les données cartographiques sont acquises au cours des précédents travaux sur le champ.

12. Procédé mis en oeuvre par ordinateur selon l'une quelconque des revendications 1 à 11, dans lequel la pluralité de routines de virage en tournière prédéterminées comprend des routines de virage en marche avant et/ou en marche arrière.

13. Unité de commande pour la commande d'une charrue agricole, la charrue agricole comprenant :
un véhicule agricole (7) ; et
un outil de charrue (10),
dans laquelle l'unité de commande est configurée pour :
recevoir des données de limite indiquant une position de la charrue agricole par rapport à une limite entre une zone de travail (3) et une tournière (5, 6) d'un champ (1) sur lequel la charrue agricole est déplacée ;
déterminer automatiquement une routine adaptée de virage en tournière ;
commander l'exécution de la routine de virage en tournière déterminée en fonction des données limites reçues ; et
**caractérisé en ce que** l'unité de commande est configurée de manière à commander activement l'amortissement du mouvement de l'outil de charrue par rapport au véhicule agricole en fonction de la routine de virage en tournière déterminée.

14. Programme informatique comprenant des instructions qui, lorsque le programme est exécuté par une unité de commande, font que l'unité de commande met en oeuvre le procédé selon l'une quelconque des revendications 1 à 12.

15. Outil de charrue agricole, comprenant l'unité de commande selon la revendication 13.
